# EUROPEAN PATENT APPLICATION

(11) **EP 2 362 465 A2**
(43) Date of publication of application: **31.08.2011**
(21) Application number: 10193866.0
(22) Date of filing: 06.12.2010
(51) Int. Cl.: H01M 2/12

(54) **Rechargeable battery**

(30) Priority: 18.02.2010 US 305906 P; 30.11.2010 US 957314
(71) Applicant: Samsung SDI Co., Ltd, Gyeonggi-do (KR)
(72) Inventor: Bak, Hyo-Rim, Gyeonggi-do (KR); Park, June-Hyoung, Gyeonggi-do (KR)
(74) Representative: Walaski, Jan Filip

(57) **Abstract**

A rechargeable battery with improved safety is provided. The rechargeable battery comprises an electrode assembly, a case for housing the electrode assembly and a cap assembly for closing the case, the cap assembly comprising a cap plate and a vent member (160) between the electrode assembly and the cap plate. The vent member comprises two or more vent portions (167) arranged to open towards the cap plate to provide an opening through the vent member, wherein the vent member comprises a support portion (165) between the vent portions, each of the vent portions being arranged to bend relative to the support portion along a bend line (164).

## Description

The present invention relates to a rechargeable battery, more particularly, to a rechargeable battery with an improved vent member.

A rechargeable, or secondary, battery is a chargeable and dischargeable battery unlike a primary battery that cannot be recharged. A low-capacity rechargeable battery has been used for small portable electronic devices such as a mobile phone, a laptop computer, and camcorder and a large-capacity rechargeable battery has been used as a power supply for driving a motor such as in a hybrid vehicle, etc., or a large-capacity power storage device.

Recently, a high output rechargeable battery using a non-aqueous electrolyte having high energy density has been developed and the above-mentioned high power rechargeable battery is configured as a large-capacity battery module by connecting a plurality of rechargeable batteries in series so that it can be used to drive a motor for an electric vehicle, etc. The rechargeable battery may be formed of a cylindrical type, a square type, and so on.

While the rechargeable battery repeats charging and discharging cycles, gas is generated in the rechargeable battery that increases its internal pressure. When the increase in pressure of the rechargeable battery is not handled properly, there is a risk that the rechargeable battery may explode.

The present invention has been made in effort to provide a rechargeable battery with improved safety by rapidly discharging gas.

According to the present invention, there is provided a rechargeable battery, comprising an electrode assembly, a case for housing the electrode assembly and a cap assembly for closing the case, the cap assembly comprising a cap plate and a vent member between the electrode assembly and the cap plate, the vent member comprising two or more vent portions arranged to open towards the cap plate to provide an opening through the vent member, wherein the vent member comprises a support portion between the vent portions, each of the vent portions being arranged to bend relative to the support portion along a bend line.

The cap plate may comprise a top portion spaced apart from the vent member and one or more exhaust ports between the vent member and the top portion, wherein the support portion is under the top portion and does not extend beyond a projection of the top portion onto the vent member.

Each of the vent portions may be defined by a notched portion in the vent member, the notched portion being arranged to break under a predetermined pressure while the vent portion remains attached to the support portion. The support portion may be in the centre of the vent member and the bend lines may be arranged along edges of the support portion, and the notched portions may extend from the bend lines towards a periphery of the vent member.

The top portion may be arranged to engage with each of the vent portions when the vent portion opens to a predetermined extent.

In the fully open position, each of the vent portions may be arranged to guide discharge gas from the electrode assembly to the one or more exhaust ports.

An end of each of the vent portions distal from the bend line may be arranged to contact the top portion of the cap plate at a predetermined bend angle with reference to the plane of the support portion. The predetermined bend angle may be between 30° and 90°.

An end of each of the vent portions distal from the bend line may be arranged to contact the top portion of the cap plate at an end thereof that defines an edge of the one or more exhaust ports.

The vent portions may comprise first and second vent portions symmetrically disposed about the centre of the vent member. The first and second vent portions may be arranged in a back-to-back configuration.

The vent portions may comprise at least three vent portions arranged about the centre of the vent member, wherein the at least three vent portions are arranged to mutually interfere with one another when open.

The rechargeable battery may comprise three or more vent portions equidistantly disposed about a centre of the vent member.

The rechargeable battery may comprise a plurality of exhaust ports, wherein openings corresponding to each of the vent portions are aligned with respective ones of the exhaust ports.

The vent portions may be arranged so as not to engage with the top portion when the vent portions are fully open.

Exemplary embodiments of the present invention improve the aperture ratio in the vent member and stably secure the discharge passage of gas, such that gas can be rapidly discharged, thereby improving the safety of the rechargeable battery.

Embodiments of the invention will now be described, by way of example, with reference to the accompanying drawings, in which:
FIG. 1 is a cut perspective view showing a rechargeable battery according to the first exemplary embodiment of the present invention;
FIG. 2A is a perspective view showing a vent member of a rechargeable battery according to the first exemplary embodiment of the present invention;
FIG. 2B is a perspective view showing a state where a notch of a vent member shown in FIG. 2A is fractured and opened;
FIG. 2C is a plan view showing the relationship between a vent member and a cap plate of the rechargeable battery according to the first exemplary embodiment of the present invention;
FIG. 3 is a partial cross-sectional view of a rechargeable battery according to the first exemplary embodiment of the present invention;
FIG. 4 is a partial cross-sectional view showing a state where the notch of the vent member of FIG. 3 is fractured and opened;
FIG. 5A is a partial cross-sectional view showing a rechargeable battery according to the second exemplary embodiment of the present invention;
FIG. 5B is a partial cross-sectional view showing a state where the notch of the vent member of FIG. 5A is fractured and opened;
FIG. 6A is a perspective view showing a vent member of a rechargeable battery according to a third exemplary embodiment of the present invention;
FIG. 6B is a perspective view showing a state where the notch of the vent member shown in FIG. 6A is fractured and opened; and

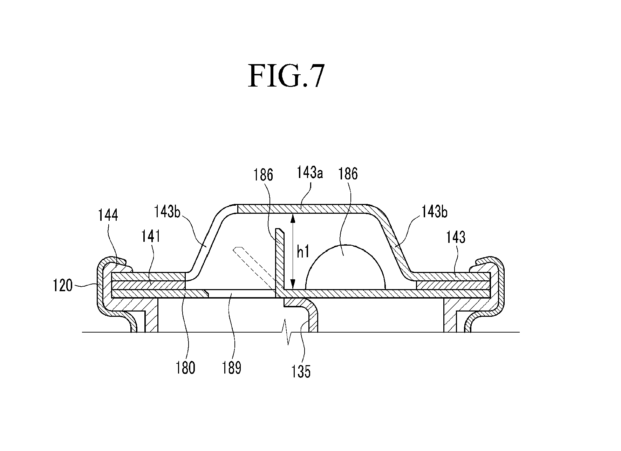

FIG. 7 is a partial cross-sectional view showing a rechargeable battery according to the third exemplary embodiment of the present invention.

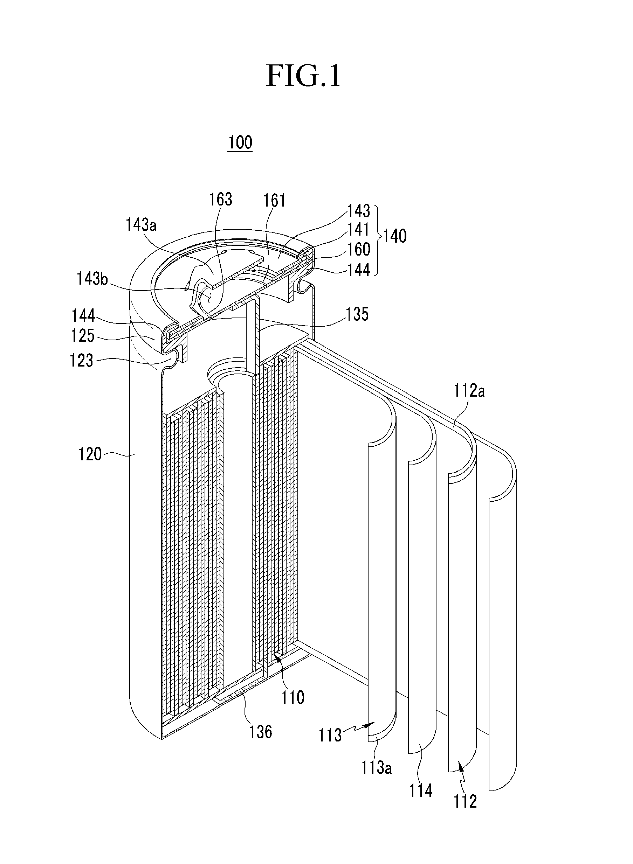

FIG. 1 is a cut perspective view showing a rechargeable battery according to an exemplary embodiment of the present invention.

Referring to FIG. 1, a rechargeable battery 100 according to the present exemplary embodiment includes an electrode assembly 110 where an anode 112 and a cathode 113 are positioned, with a separator 114 therebetween, and a case 120 whose one end is opened so that it can receive the electrode assembly 110 together with an electrolyte. The opening of the case 120 is installed with a cap assembly 140 that seals the case 120.

In detail, the case 120 is made of a conductive metal, such as aluminium, aluminium alloy, or nickel-plated steel. A shape of the case 120 according to the present exemplary embodiment is configured as a cylindrical type having an inner space in which the electrode assembly 110 is positioned. The cap assembly 140 is inserted into the case 120 and is then clamped to fix the cap assembly 140 to the case 120. In this process, the case 120 is formed with a beading portion 123 and a clamping portion 125.

The electrode assembly 110 according to the present exemplary embodiment is configured of a cylindrical type wound like a vortex after the anode 112, the separator 114, and the cathode 113 are stacked, but the structure of the electrode assembly 110 is not necessarily limited thereto but can be formed to have a different structure. The anode 112, the cathode 113, and the separator 114 are formed in a strip shape that is connected in one direction.

The anode 112 includes an anode active material layer that is formed on an anode current collector and both sides of the anode current collector and a cathode 113 includes a cathode current collector and a cathode active material layer that is formed on both sides of the cathode current collector. The separator 114 is inserted between the anode 112 and the cathode 113 to insulate the anode 112 and the cathode 113 and to provide a passage through which ions move.

An upper end of the anode 112 is formed with an anode non-coated portion 112a on which the anode active material is not formed and a lower end of the cathode 113 is formed with a cathode non-coated portion 113a on which the cathode active material layer is not formed. The present exemplary embodiment illustrates the case where the anode non-coated portion 112a and the cathode non-coated portion 113a are formed on the upper end and the lower end of the electrode assembly 110, respectively, but the present invention is not limited thereto. The anode non-coated portion 112a may be formed at one end of the anode 112 in the length direction and the cathode non-coated portion 113a may be formed at the other end of the cathode 113 in the length direction.

The cap assembly 140 includes the cap plate 143, a gasket 144 that is adjacently disposed to the case 120 and surrounds the vent member 160 that is installed below the cap plate 143 and the cap plate 143 and a safety plate 141 that is disposed between the cap assembly 140 and the vent member 160.

The cap plate 143 is formed with an upwardly protruding protrusion 143a and a penetrated exhaust port 143b and the vent member 160 is formed with notches 161 and 163 that fracture at a set pressure condition. A safety plate 141 that electrically connects the cap plate 143 and the vent member 160 is installed between the cap plate 143 and the vent member 160. The safety plate 141 has a positive temperature coefficient element and an element that increases its electric resistance approximately up to infinity when the positive temperature coefficient element exceeds a predetermined temperature. The safety plate 141 performs the role of blocking the flow of charging and discharging current when the rechargeable battery 100 reaches a temperature of the predetermined value or more.

The gasket 144 is installed to the circumference of the cap plate 143, the safety plate 141, and the vent member 160 and insulates the cap assembly 140 from the case 120.
The anode 112 is electrically connected to the vent member 160 via the anode current collecting tap 135 and the cathode 113 is electrically connected to the bottom of the case 120 via the cathode current collecting tap 136. The present exemplary embodiment illustrates the case where the anode current collecting tap 135 is directly connected to the vent member 160, but the present invention is not limited thereto. The intermediate member of the vent member 160 is installed such that the vent member 160 and the anode current collecting tap 135 may be connected via the intermediate member.

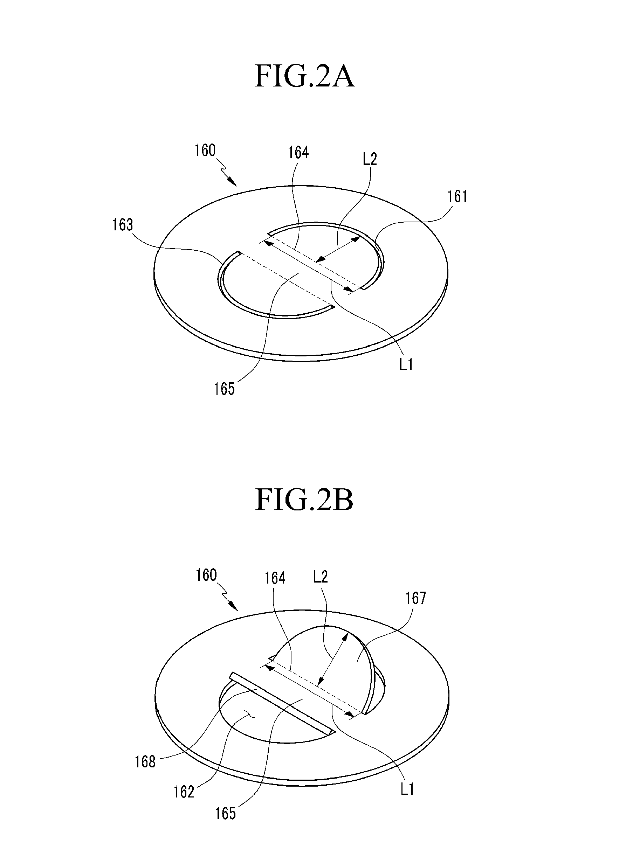

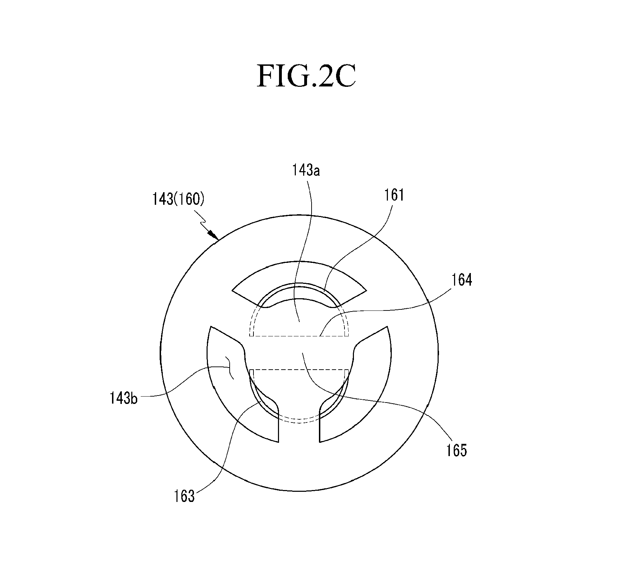

FIG. 2A is a perspective view showing the vent member according to the first exemplary embodiment of the present invention, FIG. 2B is a perspective view showing the state where the notch of the vent member shown in FIG. 2A is fractured and opened and FIG. 2C is a plan view showing the relationship between the vent member and a cap plate of the rechargeable battery according to the first exemplary embodiment of the present invention.

Referring to FIG. 2A, FIG. 2B and FIG. 2C, the vent member 160 according to the present exemplary embodiment is formed with the first notch 161 and the second notch 163 and each of the notches 161 and 163 is formed of a line segment having an arc shape. The present exemplary embodiment illustrates the case where the notches 161 and 163 are formed to have an arc shape but the present invention is not limited thereto. The notch can be formed in various shapes, such as a triangle, a quadrangle, etc. The first notch 161 and the second notch 163 according to the present exemplary embodiment is formed of a semicircular type and the first notch 161 and the second notch 163 are disposed to be spaced from each other. A supporting portion 165 is formed between the bend lines 164 that connect both ends of each notch 161 and 163. The supporting portion 165 performs a role of separating an opening 162 where the notches 161 and 163 are formed to be fractured. The first notch 161 and the second notch 163 are symmetrical such that the supporting portion 165 is provided therebetween.

The notches 161 and 163 are formed to be in a line that is convexly protruded toward the outside of the vent member 160 from the bend line 164. A first fracture piece 167 that is bent and raised at the time of fracturing the first notch 161 is positioned between the first notch 161 and the supporting portion 165 and a second fracture piece 168 that is bent and raised at the time of fracturing the second notch 163 is positioned between the second notch 163 and the supporting portion 165.

The second notch is formed of the same as the first notch and therefore, the description of the second notch will be described as the description of the first notch.

Referring to Figure 2C, the support portion 165 is under the protrusion 143a of the cap plate 143 and does not extend beyond the protrusion 143a of the cap plate 143. That is, when viewed in the plan view, the bend lines 164 and the support portion 165 are inside the protrusion 143a.

If the bend lines 164 are not inside the protrusion 143a, a portion of the support portion 165 positioned outside the protrusion 143a blocks the passage to the exhaust port 143b when the vent member 160 is opened. Since the bend lines 164 in the present embodiment are inside the protrusion 143a, the support portion 165 does not block the passage to the exhaust port 143b and the first and second fractured portions 167 and 168 guide the gas discharged through the opening 162 to the exhaust port 143b.

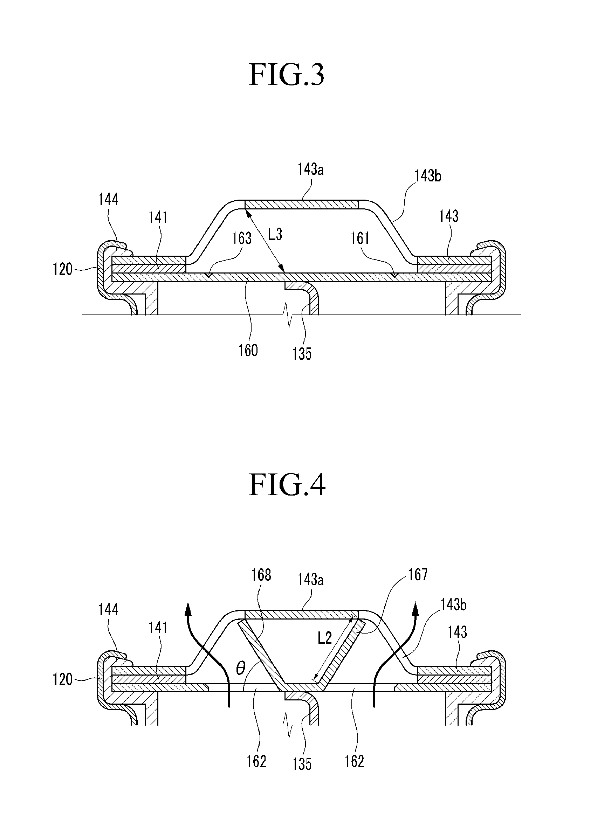

As shown in FIGS. 3 and 4, when the maximum distance from the bend line 164 to the first notch 161 is referred to as a long width L2, the long width L2 of the first notch 161 according to the present exemplary embodiment is formed of the same distance as the distance L3 from the bend line 164 to the upper end of the exhaust port 143b that is formed in the cap plate 143. Therefore, as shown in FIG. 4, when the internal pressure of the rechargeable battery is raised to break the first notch 161, the upper end of the first fracture piece 167 contacts the inside end of the exhaust port 143b to sufficiently secure the passage through which gas moves.

However, the present invention is not limited thereto and the long width L2 may be formed to be smaller than the distance L3 from the bend line 164 to the upper end of the exhaust port 143b.

In addition, since the notches 161 and 163 are formed to have a predetermined space therebetween while putting the supporting portion 165 therebetween, each notch 161 and 163 can be easily fractured without each of the notches 161 and 163 interfering with each other when being fractured, such that the opening 162 is formed at two places.

In addition, since the first notch 161 is convexly formed toward the outside of the vent member 160 with respect to the bend line 164, when the first notch 161 is fractured such that the first fracture piece 167 is raised, the first fracture piece 167 is not positioned between the exhaust port 143b and the opening 162 that is formed by the fracture of the first notch 161 and is positioned near the opening 162 and the exhaust port 143b. In other words, in reference to the drawing, it can be appreciated that the lower end of the first fracture piece 167 contacts the inner side end of the opening 162 and the upper end of the first fracture piece 167 also contacts the inner side end of the exhaust port 143b. At this time, the inner side is inwardly positioned based on the center of the vent member 160. Therefore, since gas discharged through the opening 162 moves the exhaust port 143b using the guide of the first fracture piece 167, gas can be discharged more rapidly. However, when the first notch 161 is positioned more inwardly than the bend line 164 and the exhaust port 143b is spaced from the center of the cap plate 143 and is disposed in a circumferential direction, since the first fracture piece 167 is positioned between the opening 162 and the exhaust port 143b, there is a problem in that first fracture piece 167 prevents the progress of gas.

When the first notch 161 is determined by the rise of internal pressure, the first fracture piece 167 is bent at an inclined angle of 30° to 90° with respect to the supporting portion 165 in the bend line 164. When the bending inclination of the first fracture piece 167 is smaller than 30°, there is a problem in that the gas inside the rechargeable battery cannot be discharged rapidly and when the bending inclination of the first fracture piece 167 is larger than 90°, a vortex is generated at an area adjacent to the upper end of the first fracture piece 167 such that there is a problem in that the discharge speed of gas is deteriorated. In other words, when the bending inclination of the first fracture piece 167 is larger than 90°, a reflowing phenomenon occurs by introducing gas in a reverse direction than the direction that discharges gas. Therefore, the discharge of gas is delayed due to the reflowing gas. The discharge speed of gas is very important in terms of safety of the rechargeable battery and when the discharge speed of gas is delayed, there is a serious problem in that the rechargeable battery is exploded according to the conditions. Since the discharge of gas can be performed within a short time in a sudden situation, safety can be improved only in the case where gas needs to be rapidly discharged in a short time.

An experiment was conducted where the battery module including 10 rechargeable batteries was subjected to very high temperatures. In the rechargeable battery of a comparative example where one notch having a large semicircle is formed, four batteries exploded and 6 batteries became inflamed, while in the rechargeable battery according to the present exemplary embodiment, all 10 rechargeable batteries became inflamed but they did not explode. Through the above experiment, even in the event of a fire or an abnormal situation where the temperature is very high, it could be appreciated that the rechargeable battery according to the present exemplary embodiment did not explode. The reason is that before the rechargeable battery can explode, the vent member 160 is rapidly opened, thereby making it possible to rapidly discharge the internal gas to the outside.

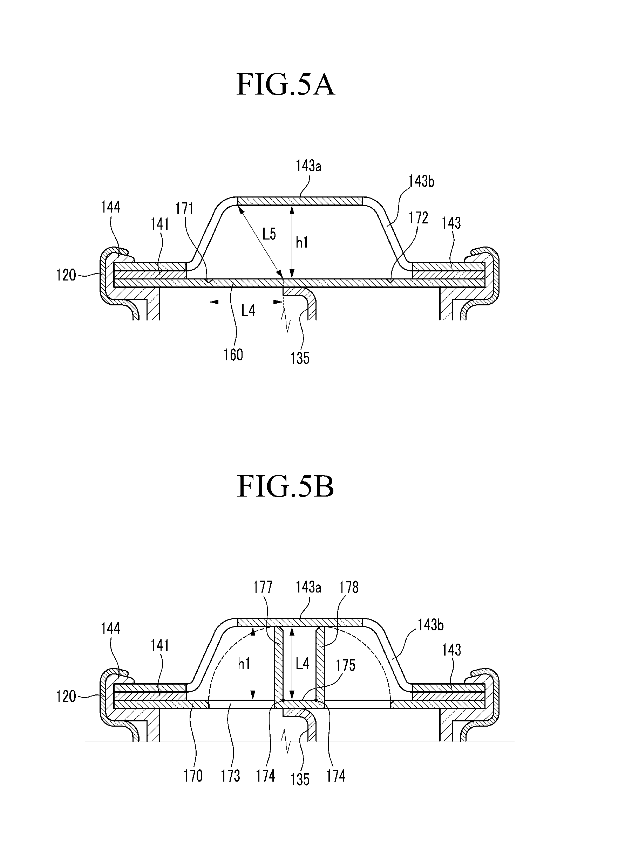

FIG. 5A is a partial cross-sectional view showing a rechargeable battery according to the second exemplary embodiment of the present invention and FIG. 5B is a partial cross-sectional view showing a state where the notch of the vent member of FIG. 5A is fractured and opened. Referring to FIGS. 5A and 5B, the rechargeable battery according to the present exemplary embodiment has the same structure as the rechargeable battery according to the first exemplary embodiment except for the structure of the vent member 170 and therefore, the repeated description thereof will be omitted.

The vent member 170 is formed with the first notch 171 and the second notch 172 having an arc type that are formed to be spaced, putting the supporting portion 175 therebetween, similar to the first exemplary embodiment. The first notch 171 and the second notch 172 are formed to be symmetrical with respect to the position of the supporting portion 175 and the line segment that connects both ends of the first notch 171 and the line segment that connects both ends of the second notch 172 become the bend line 174. When the internal pressure of the rechargeable battery is raised, the first notch 171 is fractured such that the first fracture piece 177 is bent and raised at the bend line 174 and the second notch 172 is also fractured such that the second fracture piece 178 is bent and raised at the bend line 174.

The vent member 170 according to the present exemplary embodiment is formed so that a long width L4, that is the maximum distance from the bend line 174 to the first notch is smaller than a distance L5 from the bend line 174 to the inner side end of the exhaust port 143b and is larger than a distance h1 from the bend line 174 to the upper end of the cap plate 143. Thereby, the upper ends of the fracture pieces 177 and 178 are positioned between the inner side end of the exhaust port 143b and the place just above the bend line 174, such that gas discharged through the opening 173 can be rapidly guided to the exhaust port 143b.

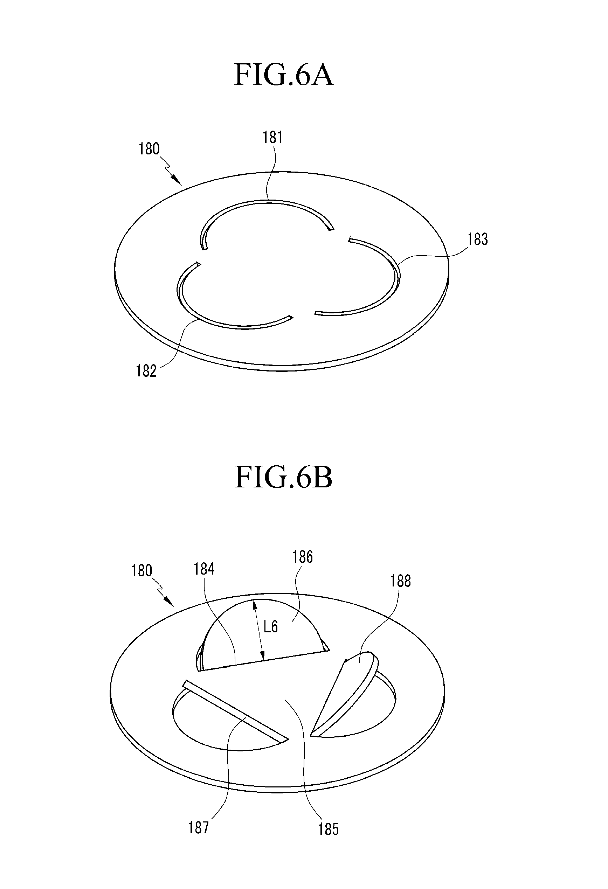

FIG. 6A is a perspective view showing a vent member of a rechargeable battery according to a third exemplary embodiment of the present invention and FIG. 6B is a perspective view showing a state where the notch of the vent member shown in FIG. 6A is fractured and opened.

Referring to FIGS. 6A and 6B, the rechargeable battery according to the present exemplary embodiment has the same structure as the rechargeable battery according to the first exemplary embodiment except for a vent member 180 and therefore, the repeated description thereof will be omitted.

The vent member 180 is formed with a first notch 181 and a second notch 182, and a third notch 183. The notches 181, 182, and 183 are equidistantly disposed along the circumferential direction of the vent member 180 and are formed in a curved line that is convexly curved toward the outside of the vent member 180. A line segment that connects both ends of the notches 181, 182, and 183 becomes a bend line 184. The cap plate 143 is formed with three exhaust ports 143b and is formed with three notches 181, 182, and 183 to correspond to the number of exhaust ports 143b. At this time, the notches 181, 182, and 183 are disposed at the corresponding positions below each exhaust port. When the notches 181, 182, and 183 are fractured due to the increase in the internal pressure of the battery, a first fracture piece 186, a second fracture piece 187, and a third fracture piece 188 are bent and raised at the bend line 184. A supporting portion 185 that supports the fracture pieces 186, 187, and 188 is formed at the center of the vent member 180 among the notches 181, 182, and 183.

When the fracture pieces 186, 187, and 188 are raised, since the vent member 180 is formed with an opening 189, the opening is positioned at the corresponding positions below the exhaust port. Thereby, gas discharged through each opening 189 can be rapidly discharged through the corresponding exhaust port 143b.
Since the second notch 182 and the third notch 183 are configured to have the same structure as the first notch 181, the description of the second notch 182 and the third notch 183 will be omitted.

A long width L6 that is the maximum distance from the bend line 184 to the first notch 181 is formed to be smaller than the distance h1 from the bend line 184 to the upper end of the cap plate 143. Therefore, the fracture pieces 186, 187, and 188 can be freely bent at any angle according to the fracture pressure but interferes with the adjacent fracture pieces 186, 187, and 188, thereby making it possible to prevent the fracture piece 186, 187, and 188 from excessively bending.

While this invention has been described in connection with what are presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery, comprising:
an electrode assembly (110);
a case (120) for housing the electrode assembly; and
a cap assembly (140) for closing the case, the cap assembly comprising:
a cap plate (143); and
a vent member (160, 170, 180) between the electrode assembly (110) and the cap plate (143), the vent member comprising two or more vent portions (167, 168;
177, 178; 186, 187, 188) arranged to open towards the cap plate to provide an opening through the vent member, wherein the vent member (160, 170, 180) comprises a support portion (165, 175, 185) between the vent portions, each of the vent portions being arranged to bend relative to the support portion along a bend line (164, 174, 184).

2. The rechargeable battery of claim 1, wherein the cap plate (143) comprises:
a top portion (143a) spaced apart from the vent member (160); and
one or more exhaust ports (143b) between the vent member and the top portion;
wherein the support portion (165) is under the top portion and does not extend beyond a projection of the top portion onto the vent member.

3. The rechargeable battery of claim 1 or 2, wherein each of the vent portions is defined by a notched portion (161, 163; 171, 172; 181, 182, 183) in the vent member (160, 170, 180), the notched portion being arranged to break under a predetermined pressure while the vent portion remains attached to the support portion (165, 175, 185).

4. The rechargeable battery of claim 3, wherein the support portion is in the centre of the vent member and the bend lines are arranged along edges of the support portion, and the notched portions extend from the bend lines towards a periphery of the vent member.

5. The rechargeable battery of claim 2, 3 or 4,
wherein the top portion is arranged to engage with each of the vent portions (167, 168; 177, 178) when the vent portion opens to a predetermined extent.

6. The rechargeable battery of claim 5, wherein, in the fully open position, each of the vent portions is arranged to guide discharge gas from the electrode assembly to the one or more exhaust ports.

7. The rechargeable battery of claim 5 or 6, wherein an end of each of the vent portions distal from the bend line is arranged to contact the top portion (143a) of the cap plate (143) at a predetermined bend angle with reference to the plane of the support portion.

8. The rechargeable battery of claim 7, wherein the predetermined bend angle is between 30° and 90°.

9. The rechargeable battery of claim 5 or 6, wherein an end of each of the vent portions distal from the bend line is arranged to contact the top portion (143a) of the cap plate (143) at an end thereof that defines an edge of the one or more exhaust ports (143b).

10. The rechargeable battery of any one of the preceding claims, wherein the vent portions comprise first and second vent portions (167, 168; 177, 178) symmetrically disposed about the centre of the vent member.

11. The rechargeable battery of claim 9 or 10, wherein the first and second vent portions are arranged in a back-to-back configuration.

12. The rechargeable battery of any one of claims 1 to 3, wherein the vent portions comprise at least three vent portions (186, 187, 188) arranged about the centre of the vent member, wherein the at least three vent portions are arranged to mutually interfere with one another when open.

13. The rechargeable battery of any one of claims 1 to 4, comprising three or more vent portions (186, 187, 188) equidistantly disposed about a centre of the vent member.

14. The rechargeable battery of any one of the preceding claims, comprising a plurality of exhaust ports (143b), wherein openings (189) corresponding to each of the vent portions are aligned with respective ones of the exhaust ports.

15. The rechargeable battery of any one of claims 12 to 14 when dependent on claim 2, wherein the vent portions do not engage with the top portion when the vent portions are fully open.
